# EUROPEAN PATENT APPLICATION

(11) **EP 1 270 126 A1**
(43) Date of publication of application: **02.01.2003**
(21) Application number: 01305662.7
(22) Date of filing: 29.06.2001
(51) Int. Cl.: B23D 61/02

(54) **Circular saw blade with wear-resitant regions on its support disc**

(71) Applicant: Turbolite AG, 4246 Wahlen (CH)
(72) Inventor: Özturk, Heiri, 4243 Röschenz (CH)
(74) Representative: Loven, Keith James

(57) **Abstract**

A circular saw blade has one or more wear-resistant regions (3) formed on the support disc (10) thereof. The regions (3) are preferably formed by electrodeposition of diamond or silicon carbide particles through a resist simultaneously with deposition of a support layer. The regions may be contiguous or formed from individual wear-resistant portions collectively forming a wear-resistant region. The regions and/or individual portions may form indicia. The regions preferably extend over 30-40% of each face and may occupy over half the radial dimension of the disc.

## Description

### Field of the Invention

The present invention relates generally to circular saw blades, and more particularly but not necessarily to circular saw blades of the type having diamond or other abrasive cutting members for use in cutting masonry and stone.

### Background to the Invention

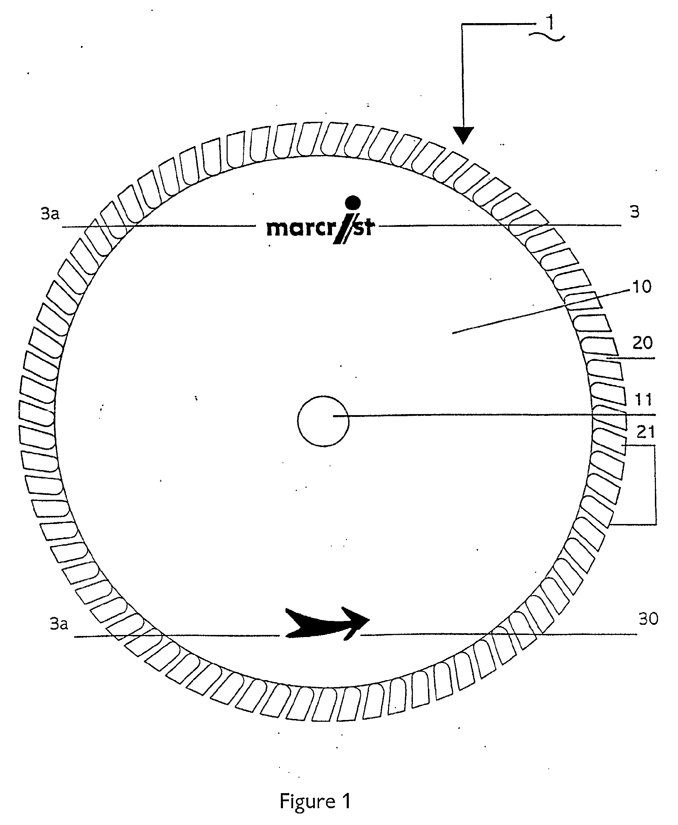

Figure 1 is a side view showing a conventional circular saw blade 1, consisting of a metal disc 10 having a centre aperture 11 for securing the blade to the shaft of the drive motor of the circular saw (not shown). An annular cutting region 20 is disposed around the outer periphery of the disc 10, and carries a plurality of abrasive tips 21 spaced therearound. In an alternative configuration, a plurality of teeth are formed around the periphery of the disc 10, and abrasive tips are attached to the teeth.

When a cutting operation is performed using a circular saw equipped with this known type of circular saw, a workpiece is cut by the abrasive tips 21 as the blade 9 is rotated. During this operation, a large amount of heat is generated on not only the annular cutting region 20, but also both side faces of the disk 10, so that the side faces are rapidly heated. The heat generated in the disk 10 is transmitted to the abrasive tips 21, so that the durability thereof is reduced, the cut surfaces of the workpiece become rough, and the workpiece is not cut precisely. Additionally, the heat can cause the disc 10 to become deformed, and this can lead to the generation of noise, and even to jamming of the blade in the cut slot in the workpiece or disintegration of the blade.

It is usual for various marks 30, such as the manufacturer's name, the name of the product, directions for use, and a sign such as an arrow indicating direction of rotation, to appear on both faces of the disc 10. The marks 30 are typically printed on the disc, embossed or adhered thereto, or engraved therein, and are easily worn away or damaged by the friction between the faces of the disc and the workpiece, in use. Accordingly, the dual functions of indicating and advertising performed by the marks 30 are eliminated, causing inconvenience and potentially a danger of misuse of the disc.

It is known to provide at least one abrasive region on both faces of the cutting disc. These regions are provided by localised pads of abrasive material with a thickness greater than the remainder of the disc. They serve to minimise wear of the faces of the disc and contribute towards reducing vibration, improving the cutting capability of the saw blade and enhancing the finish of the cut surface(s). They are typically shaped to provide an indicating function, such as an arrow to indicate the direction of rotation. However, in certain areas of use, there is a continued need for a cutting disc that out-performs the known disc, especially as regards the tendency of the core of the disc to become undercut or even destroyed resulting from excessive wear of the disc faces.

### Summary of the Invention

Accordingly, the present invention provides a circular saw blade comprising a support disc having cutting elements disposed around the periphery thereof, characterised by a wear-resistant region extending over a substantial proportion of each opposed face of the disc.

The regions may be formed from a material such as diamond (natural or synthetic) or silicon carbide coated on the faces. The combined thickness of the disc and coating is greater than the disc but preferably less than that of the cutting elements.

Preferably, the cutting elements are of the type comprising an abrasive grit supported in a softer carrier material. For example, the grit may be a carbide grit, or diamond, and the carrier material may be a metal or metal alloy. The wear-resistant regions are preferably formed from a material having the same cutting capacity as the material or the cutting elements, and may be formed of the same material. The regions, or at least some of them, may be shaped as indicia indicating the direction of rotation of the disc in use, to ensure correct fitting of the disc, especially after the disc has been in use.

The wear-resistant regions may be formed by electrodeposition. A base or support coat may be deposited on the disc face simultaneously with the wear-resistant material using a resist layer. The patterned region may then be created by removal of the resist layer or, if preferred, the resist layer may contain indicia, in which case it can be left on the disc face.

The regions preferably comprise indicia indicating identifying or instructional information, advertising names or logos, or the like. This may be achieved by shaping the regions, by forming a relief or intaglio pattern in the surface thereof, by printing on them, by incorporating coloured materials, or by any combination selected from these possibilities. A number of different regions may be provided, spaced around the face of the disc.

The circular saw blade of the present invention is capable of reducing the generation of heat therein by reducing contact of the workpiece with the faces of the blade, thereby extending the life of the blade and preserving indicia or marks on the face thereof.

### Brief Description of the Drawings

The invention will now be described with reference to the drawings, in which:
Figure 1 is a side view of a circular saw blade in accordance with the prior art;
Figure 2 is a side view of a circular saw blade according to one embodiment, and
Figure 3 is a side view of a circular saw blade according to a second embodiment of the invention.

### Detailed Description of the Illustrated Embodiment

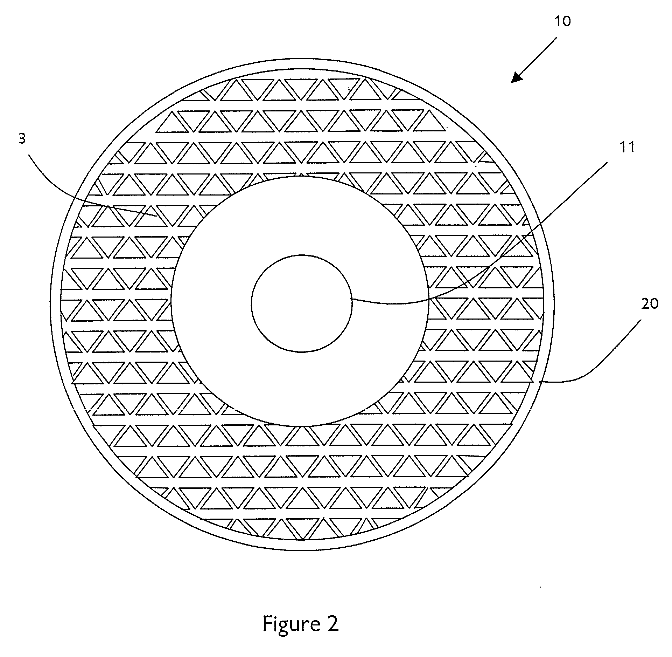

Referring to Figure 2, the circular saw blade 1 includes a disc 10 having a centre aperture 11 for securing the blade to the shaft of a drive motor of a circular saw tool (not shown). An annular cutting portion 20 on which a plurality of cutting tips (not shown) are provided at regular intervals is disposed around the outer periphery of the disc 10. A pattern of wear-resistant, abrasive regions 3 are formed over the disc faces. The pattern extends over a substantial portion of the faces. Typically, the regions may extend over 30-40% of each face and may extend over at least half of the radial dimension of the disc in a direction inwardly from the outer edge.

Describing the manufacturing process in more detail, the centre aperture 11 is cut through the centre of the disc 10 using a known cutting machine (not shown). The wear-resistant regions 3 are preferably formed by a plating technique such as electrodeposition. In this case, a resist pattern is first placed on the disc face. Next, a support layer is deposited onto the disc face. This step preferably includes the simultaneous deposition of support material and wear-resistant material. Particles forming the wear-resistant layer are electrostatically attracted to the disc face as the support material is deposited.

The regions 3 may, for example, delineate a manufacturer's name, the name of the product, directions for use, or may constitute one or more signs, such as arrows, for indicating the direction of rotation, or a combination of some or all of these. The information may vary according to the particular circular saw type. Accordingly, the regions may be formed in a variety of shapes and orientations.

The hot-moulded cutting tips are ground to be capable of cutting a workpiece, for example by use of a grinding stone. When a workpiece is cut using a conventional circular saw blade, such as that illustrated in Figure 1, the blade rotates and the cutting tips gradually cut into the workpiece. Until the circular saw blade stops rotating, friction occurs at the points of contact and accordingly heat is generated at these points.

In accordance with the present invention, both sides of the disc 10 are spaced apart from the workpiece by the wear-resistant regions 3, so that surface contact between the disc 10 and the workpiece is effectively prevented. As previously mentioned, the regions preferably occupy at least one half of the radial extent of the disc faces. The total coverage of each face is preferably 30-40% of the effective area, ie the "free" area between the cutting elements and the central core. As a result, the life span of the circular saw blade is lengthened owing to a reduction in the generation of heat, and noise due to vibration of the circular saw is minimised. In addition, since the wear-resistant regions 3 extend over a substantial proportion of the disc, vibration of the disc is reduced and the tendency of the blade temperature to rise, possibly excessively, is curtailed. The cutting tips 21 are therefore held true and the cut surfaces of the workpiece are cut smoothly and have low roughness.

The regions 3 can preserve their indicatory and advertising functions until the life span of the circular saw blade 1 is reached, unlike printed or attached marks as described hereinbefore with reference to Figure 1.

The regions 3 may be coloured or their appearance otherwise enhanced so as to improve the capacity of the marks to heighten the indicatory and advertising functions of the regions 3.

As described hereinbefore, the present invention provides a circular saw blade in which wear-resistant regions are formed over a substantial proportion of the disc, so that gaps are created between the circular saw blade and the workpiece during a cutting operation, thereby reducing the generation of heat, stabilising the disc and reducing wear of the disc faces. As a result, the life span of the circular saw blade is lengthened considerably and the cut surfaces become smoother.

In addition, indicia etc on the circular saw blade are not worn away or damaged during the life span of the blade. Inconvenience in attaching and printing the marks repeatedly is thus eliminated, and an unskilled worker can use the blade safely, and its manufacturer's advertisement can be maintained for a long time.

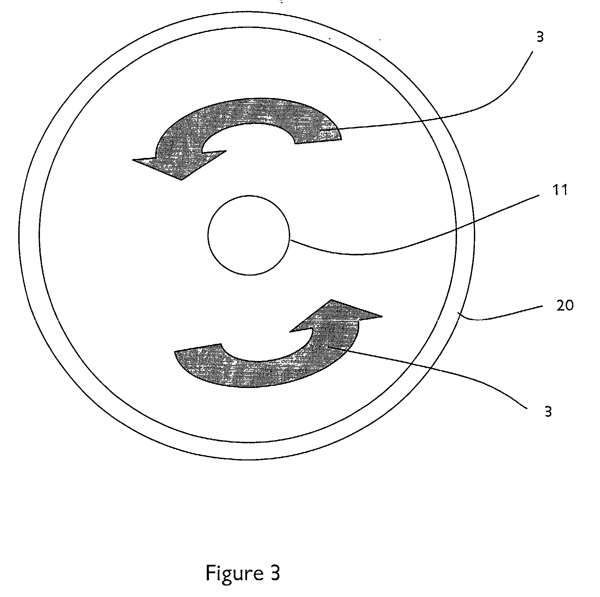

In simpler configurations of the invention, smaller number of wear-resistant regions 3 may be employed. For example, Figure 3 shows two wear-resistant regions 3 displaying symbols, such as rotation direction arrows. Generally, different numbers of such regions may be employed, having different shapes and configurations to those shown. For example, some of the regions may be decorated with simple patterns, or undecorated. The regions are preferably spaced from the central hole 11 so as to be adjacent to the abrasive or cutting tips 21, but additional regions may also be provided inwardly of these, for example to achieve greater cutting depths in the workpiece.

The regions do not necessarily have to be contiguous over the disc faces but can be located in discrete regions spaced around and over the faces. In this way, the regions can themselves both provide indicia and support and space the disc faces from the cut surfaces of a workpiece over almost entirely the whole of the disc faces between the central core and the cutting elements. For example, the regions can define arrows indicating the direction of rotation of the disc, as in Figure 3.

In the situation where the disc is formed with a pattern of holes, for example of varying size and/or location, such as in our co-pending European Patent Application (our Ref P0815.EPA), the wear-resistant coating or region(s) may be disposed over the surface of the disc as localised pads or spots between some or all of the holes.

The regions can be formed as continuous coatings or can be composed of individual regions of wear-resistant material together constituting a wear-resistant region. In the latter case, the individual regions can also be formed into indicia, such as arrows, and the collection of individual regions can also form larger indicia. In other words, a collection of small arrows forming a larger arrow. Of course the indicia are not restricted to arrows but can consist of any indicia of an informative, instructional, advisory or advertising nature.

## Claims

1. A circular saw blade comprising a support disc (10) having cutting elements (21) disposed around the periphery thereof, **characterised by** a wear-resistant region (3) extending over a substantial proportion of each opposed face of the disc.

2. A circular saw blade according to Claim 1, wherein the cutting elements (21) are of the type comprising an abrasive grit supported in a softer carrier material.

3. A circular saw blade according to Claim 1 or 2, wherein the said regions (3) comprise a material having the same cutting capacity as the cutting elements.

4. A circular saw blade according to Claim 3, wherein the abrasive regions (3) comprise an abrasive grit supported in a softer carrier material.

5. A circular saw blade according to any preceding claim, wherein the wear-resistant regions (3) are formed by coating.

6. A circular saw blade according to Claim 5, wherein the coating is formed by electrodeposition.

7. A circular saw blade according to Claim 6, wherein wear-resistant material is deposited on the disc faces simultaneously with deposition of a support layer.

8. A circular saw blade according to Claim 6, wherein said deposition is performed through a resist placed on the said faces.

9. A circular saw blade according to any preceding claim, wherein at least one of said regions defines indicia.

10. A circular saw blade according to any preceding claim, wherein at least one of the wear-resistant regions (3) is formed from a continuous coating.

11. A circular saw blade according to any preceding claim, wherein at least one of the wear-resistant regions (3) is formed from a pattern of individual wear-resistant portions.

12. A circular saw blade according to any preceding claim, provided with a plurality of wear-resistant regions (3) on each face thereof.

13. A circular saw blade according to any preceding claim, wherein the said wear-resistant regions extend over at least half the radial dimension of the disc.

14. A circular saw blade according to any preceding claim, wherein the said wear-resistant regions extend over 30-40% of the effective area of each disc face.
